# EUROPÄISCHE PATENTSCHRIFT

(11) **EP 2 068 035 B1**
(45) Veröffentlichungstag und Bekanntmachung des Hinweises auf die Patenterteilung: **26.10.2011**
(21) Anmeldenummer: 08450179.0
(22) Anmeldetag: 12.11.2008
(51) Int. Cl.: F16G 11/02

(54) **Pressklemme und Seilendverbindung**
Press clamp and rope end connection
Manchon et connexion de câble

(30) Priorität: 27.11.2007 DE 202007016642 U
(43) Veröffentlichungstag der Anmeldung: 10.06.2009
(73) Patentinhaber: Teufelberger Seil Gesellschaft m.b.H., 4600 Wels (AT)
(72) Erfinder: Baldinger, Peter, 4311 Schwertberg (AT); Güttler, Diethart, 4730 Heiligenberg (AT); Konrad, Roland, 4040 Linz (AT); Teufelberger, Florian, 4609 Thalheim/Wels (AT); Traxl, Robert, 4802 Ebensee (AT)
(74) Vertreter: Sonn & Partner Patentanwälte

(56) Entgegenhaltungen:
- WO-A-01/90598
- CA-A1- 971 337
- DE-C1- 19 708 029
- DE-U1-202006 011 204
- FR-A- 1 197 581
- GB-A- 987 107

## Beschreibung

Die Erfindung betrifft eine Pressklemme zur Anbringung an einem Seilende, wie im Oberbegriff von Anspruch 1 angegeben, sowie weiters eine Seilendverbindung mit einer derartigen, am Seilende angebrachten Pressklemme.

Es ist bekannt, Pressklemmen zum Abschließen von Seilenden, zur Herstellung von dauerhaften Seilendverbindungen, zu verwenden. Ganz allgemein werden diese Pressklemmen auf das entsprechend vorbereitete Seilende aufgeschoben und danach verpresst. Die Pressklemmen sind in der Regel Stahlhülsen, welche mit einem geeigneten Presswerkzeug mit entsprechend hoher Kraft auf das Seil gepresst werden. Durch die Verformung (Kaltverformung) der Pressklemme passt sich die Pressklemme an die Seiloberfläche an, so dass ein kombinierter Kraft- und Formschluss erzielt wird.

Bekannte Pressklemmen ergeben sich beispielsweise aus dem Dokument "Bolzenverpressungen als Seilendverbindungen für sicherheitsrelevante Anwendungen", von Dr.-Ing. Wolfram Vogel, Institut für Fördertechnik und Logistik, Universität Stuttgart, 1. Internationaler Stuttgarter Seiltag, 21. Februar 2002; oder aber aus GB 987 107 A, aus CA 971 337 A1 bzw. DE 92 03 840.9 U1 (bzw. der entsprechenden AT 404 499 B), wo eine an einem Drahtseilende aufgepresste Hülse geoffenbart ist, die für die Anwendung in Hebezeugen in einer Tasche in einem Schlossteil eingehängt ist; vergleichbare auf Seilenden aufgepresste Stahlhülsen (Presshülsen) sind weiter der DE 40 22 275 A1 bzw. der korrespondierenden DE 89 09 340.2 U1 der DE 20 2006 011 204 U1 oder der WO 01/90598 A zu entnehmen.

Das Seilende kann auf verschiedene Arten für die Verpressung vorbereitet werden, wie insbesondere durch Glühen des Seilendes, durch Glühen des Seilendes und nachträgliche Ausformung einer Spitze, durch Verschweißen des Seilendes oder durch Löten des Seilendes. In jedem dieser Fälle wird das konfektionierte Seilende im Seilaufbau durch die erfolgte Wärmeeinbringung geschwächt.

Im Fall von Durchgangs-Pressklemmen, bei denen das Seilende durch eine hülsenförmige Pressklemme hindurch gesteckt wird, bis das geschwächte Seilende am anderen Ende vorsteht, kann das geschwächte Seilende abgeschnitten werden. Von Nachteil ist bei dieser Technik jedoch, dass eine technische Formgebung an der Pressklemme, wie beispielsweise das Vorsehen eines Gewindeteils, einer Öse oder dgl., kaum möglich ist.

Als Alternative steht im Stand der Technik eine Form der Pressklemme mit einem Sackloch zur Verfügung, in das das Seilende eingesteckt wird, wobei andererseits an der Pressklemme die verschiedensten technischen Ausformungen, wie Gewindeteile, Ösen usw., möglich sind. Hier ist von Nachteil, dass das geschwächte Seilende im Inneren der Pressklemme verbleibt und den Kraftschluss der Verbindung negativ beeinflussen kann. Wenn die Länge des Seils, auf der die Pressung erfolgt, dementsprechend vergrößert wird, so muss auch die Baulänge der Pressklemme verlängert werden, und zwar praktisch um die Längenabmessung des geschwächten Seilendes im Inneren der Pressklemme, wobei derartige große Pressklemmen-Längen, abgesehen vom größeren Material- und Herstellungsaufwand, für bestimmte Anwendungen nicht möglich sind.

Aus DE 200 06 403 U1 ist weiters eine Seilendverbindung bekannt, die aus insgesamt drei Teilen aufgebaut ist, nämlich einer eigenen Presshülse und einer diese umschließenden Terminalhülse sowie weiters ein in ein Innengewinde der Terminalhülse einschraubbares Anschlussstück (Endstück). Die Hülsen sollen dabei aus speziellen Metallen bestehen, um ein Anbringen mit vergleichsweise kleinen Werkzeugen zu ermöglichen. Ein Nachteil ist hier, dass zufolge der in einander angeordneten Hülsen bei einer vorgegebenen Dimensionierung der inneren Presshülse nur vergleichsweise niedrige Zugkräfte übertragen werden können, verglichen mit dem Fall einer einheitlichen Pressklemme mit vergleichbaren Außendurchmesser, da bei letzterer die kraftübertragenden Teile stärker dimensioniert sein können, verglichen mit der innenliegenden, vergleichsweise dünnen Presshülse.

Dieser Nachteil trifft auch auf die Seilkupplung gemäß DE 27 05 150 U zu, bei der an den Enden von zwei zu verbindenden Seilen Hülsen aufgepresst werden. Die eine Hülse wird dann in einen Teil der anderen Hülse eingesteckt, welcher über das zugehörige Seilende vorsteht, und die beiden in einander gesteckten Hülsen werden so mit Hilfe eines weiteren Teils, nämlich einer Hohlschraube, in ihrer Verbindung gesichert. Auch hier können bei einem gleichen Außendurchmesser nur relativ niedrige Zugkräfte aufgenommen werden, da die kraftübertragenden Teile bei vorgegebenem Außendurchmesser begrenzte Querschnittsabmessungen aufweisen. An sich liegen hier im Übrigen herkömmliche einfache Pressklemmen vor, wie sie bereits vorstehend erläutert wurden.

Aus der DE 197 08 029 C1 ist eine Seilendverbindung bekannt, bei der eine Hülse auf das Seilende aufgepresst wird; diese Hülse ist mit Verbindungsmitteln, wie einem Außengewinde oder einem Innengewinde, versehen. Im Einzelnen wird das Gewinde nach dem Verpressen aufgebracht, was umständlich ist und bei hochfesten Werkstoffen überdies Schwierigkeiten in der Herstellung bereitet. Weiters ist hier nachteilig, dass beim Vorsehen eines Gewindes an der Außenseite der Pressklemme ein aufgeschraubtes Bauteil unweigerlich über die Außenkontur der Pressklemme vorsteht.

Diese Nachteile treffen auch auf die zweiteilig ausgeführte Pressklemme gemäß FR 1 197 581 A, Fig. 5, zu, wo eine Hülse auf das Seilende aufgepresst und anschließend mit einem Außengewinde versehen wird; danach wird ein Ösen-Anschlussteil aufgeschraubt.

Es ist nun Aufgabe der Erfindung, eine Pressklemme sowie eine Seilendverbindung wie eingangs angegeben vorzusehen, wobei die Nachteile der Pressklemme gemäß Stand der Technik vermieden werden und eine feste Verbindung der Pressklemme mit dem Seilende ohne Beibehaltung des geschwächten Seilendes, ähnlich wie bei einer Durchgangspressklemme, in Verbindung mit der Ausbildung der Pressklemme mit technischen Ausformungen oder Anschlussteilen, wie Gewindeteilen, Ösenteilen usw., also wie bei Pressklemmen mit Sackloch, erzielt werden können.

Zur Lösung dieser Aufgabe sieht die Erfindung eine Pressklemme wie in Anspruch 1 definiert bzw. eine Seilendverbindung mit einer solchen Pressklemme vor. Vorteilhafte Ausführungsformen und Weiterbildungen sind in den abhängigen Ansprüchen angegeben.

Durch die erfindungsgemäß vorgesehene zweiteilige Ausführung der Pressklemme ist es möglich, den einen Teil als Durchgangs-Pressklemmstück vorzusehen, durch den das Seilende hindurch gesteckt werden kann, wonach das geschwächte Seilendstück abgeschnitten werden kann. An diesem Durchgangs-Pressklemmstück wird, nach Abschneiden des geschwächten Seilendstücks, das zweite Teilstück der Pressklemme, das Endstück, angebracht, wobei die Verbindung zwischen den beiden Teilstücken über Reibschluss oder allgemein Kraftschluss, insbesondere auch über eine Gewindeverbindung, bzw. über einen Formschluss erfolgen kann. Vor allem kann eine besonders feste Verbindung zwischen den beiden Teilstücken erzielt werden, da das Pressklemmstück an dem, dem Endstück zuzuwendenden äußeren Ende einen Verbindungsbereich mit reduziertem Querschnitt, vorzugsweise mit einer Nut, aufweist, und da das Endstück am entsprechenden Ende einen Aufnahme-Verbindungsbereich mit einer stirnseitigen Ausnehmung, vorzugsweise mit einem hinterschnittenen Mündungsrand, zur Aufnahme des Verbindungsbereichs des Pressklemmstücks aufweist.

Das Endstück selbst kann dann in vorteilhafter Weise in der gewünschten Form ausgebildet sein, etwa mit einem Bolzen, insbesondere mit einem Außengewinde, aber auch mit einer Öse oder dgl. Anschlussteil. Dementsprechend werden mit den vorliegenden Pressklemmen in der geteilten Ausführung die Vorteile der Pressklemmen mit Durchgang und jene der Pressklemmen mit Sackloch gemäß Stand der Technik in Kombination erzielt, ohne dass deren Nachteile in Kauf genommen werden müssten. Insbesondere können mit den vorliegenden Pressklemmen nach der Verarbeitung einerseits hohe Kräfte übertragen werden, wobei für die Pressung kurze Längenabmessungen ausreichen, und andererseits sind keine abgeschwächten Seilenden mehr vorhanden; nichtsdestoweniger können Anschlussteile, wie Gewindeteile etc., vorgesehen werden.

Das - geschwächte - Seilendstück kann derart abgeschnitten werden, dass das Seilende dann bündig mit dem aufgepressten Pressklemmstück abschließt. Dadurch kann das zweite Teilstück, das Endstück, ohne die Notwendigkeit einer stirnseitigen Vertiefung für die Aufnahme eines Seilendstücks ausgeführt werden und demgemäß vergleichsweise kurz sein.

Bei der Herstellung der Seilendverbindung, d.h. der Anbringung der Pressklemme, wird insbesondere derart vorgegangen, dass zunächst das Seilende in herkömmlicher Weise für die Verpressung vorbereitet wird, wonach das konfektionierte Seilende durch das Durchgangs-Pressklemmstück geschoben wird, und zwar so weit, dass das abgeschwächte Seilendstück genügend weit über das Ende des Pressklemmstücks hinausragt. Danach wird das Durchgangs-Pressklemmstück verpresst, d.h. in an sich herkömmlicher Weise durch Kaltpressen kraft- bzw. formschlüssig am Seil fixiert. Sodann wird das überstehende Seilende mit dem geschwächten Seilendstück abgeschnitten, und zwar wie erwähnt vorzugsweise so, dass ein bündiger Abschluss an der Stirnseite des Durchgangs-Pressklemmstücks erhalten wird. Danach wird das Endstück mit dem Pressklemmstück, beispielsweise durch Aufpressen oder durch Verschrauben, verbunden.

Die Erfindung wird nachfolgend anhand der beigefügten Zeichnung, in der einerseits Pressklemmen gemäß Stand der Technik und andererseits besonders bevorzugte Ausführungsformen der Erfindung in schematischen Teil-Längsschnitten gezeigt sind, noch weiter erläutert. Dabei zeigen im Einzelnen:
die Fig. 1A und 1B die Anbringung einer Durchgangs-Pressklemme gemäß Stand der Technik, wobei in Fig. 1A der Zustand vor der Verpressung und in Fig. 1B der Zustand nach der Verpressung, und nach dem Abschneiden des Seilendstücks, veranschaulicht ist;
die Fig. 2A und 2B in vergleichbaren Darstellungen die Anbringung einer Pressklemme mit Sackloch gemäß Stand der Technik vor der Verpressung (Fig. 2A) und nach der Verpressung (Fig. 2B);
Fig. 3A die Anbringung eines Durchgangs-Pressklemmstücks einer erfindungsgemäßen zweigeteilten Pressklemme auf einem Seilende, das durch eine Wärmebehandlung, wie Glühen, Glühen und Ausformen, Verschweißen oder Verlöten, vorkonditioniert ist;
Fig. 3B den Zustand bei der Aufbringung der erfindungsgemäßen Pressklemme, in dem das Durchgangs-Pressklemmstück auf dem Seilende bereits verpresst und das geschwächte Seilende abgeschnitten ist, jedoch das zugehörige zweite Teilstück der Pressklemme, das Endstück, noch vom Pressklemmstück getrennt ist;
Fig. 3C die fertig montierte Pressklemme gemäß der Erfindung, wobei nun das Endstück mit dem Pressklemmstück verpresst ist;
   und
Fig. 4 in einer Darstellung ähnlich Fig. 3C eine Ausführung der erfindungsgemäßen Pressklemme, bei der das Endstück mit dem Pressklemmstück statt durch Verpressen durch Verschrauben verbunden ist.

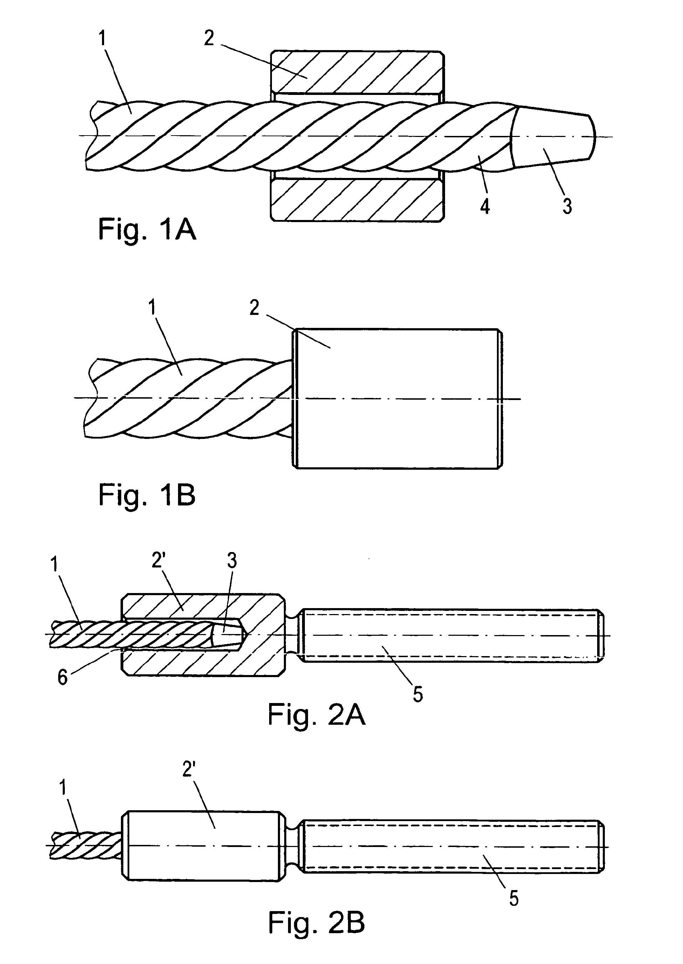

In Fig. 1A und 1B ist ein Seil 1, insbesondere Drahtseil 1, veranschaulicht, auf dem eine Durchgangs-Pressklemme 2 durch Aufpressen angebracht werden soll (Zustand gemäß Fig. 1A) bzw. aufgepresst ist (s. Fig. 1B). Das Seil 1 wurde bereits zuvor am Ende durch Glühen, ggf. Ausformen, oder aber durch Verschweißen oder Verlöten konditioniert, s. das Seilendstück 3 am Seilende 4. Dieses Seilendstück 3 hat durch die Wärmebehandlung einen geschwächten Seilaufbau, weshalb es nicht im Inneren der Pressklemme 2 vorliegt, da dann der Halt der Pressklemme 2 auf dem Seil 1 gemindert wäre. Das Seilende 4 mit dem konditionierten Seilendstück 3 wird daher nach dem Aufpressen der Pressklemme 2 auf das Seil 1 abgeschnitten; dieser Zustand ist in Fig. 1B gezeigt.

Bei der in den Fig. 2A und 2B veranschaulichten Pressklemme 2' mit Sackloch gemäß Stand der Technik ist eine zusätzliche technische Ausformung, beispielsweise mit einem Gewindebolzen 5, vorgesehen. Die Pressklemme 2', die auf dem Seilende mit dem vorkonditionierten Seilendstück 3 anzubringen ist (Fig. 2A) bzw. angebracht ist (Fig. 2B) weist demgemäß ein Sackloch 6 zum Einstecken des Endbereichs des Seils 1 auf, um dann darauf die Pressklemme 2' unter Kaltverformung aufzupressen. Am vom Seil 1 abgewandten Ende ist die Pressklemme 2' einstückig mit dem Bolzenteil 5, wie aus Fig. 2A und 2B ersichtlich ist, um so das Seil 1 mit diesem Anschlussteil 5 in einer gewünschten Anwendung montieren zu können.

Um die schwächere Pressverbindung zwischen dem Seilendstück 3 und der Pressklemme 2' zu kompensieren, muss die Pressklemme 2' mit einer entsprechend größeren Länge, verglichen etwa mit der Länge der Durchgangs-Pressklemme 2 gemäß Fig. 1, ausgebildet werden, was hinsichtlich Materialkosten und Herstellung nachteilig ist. Andererseits ist aber das konditionierte Seilendstück 3 als Vorbereitung für das Verpressen notwendig.

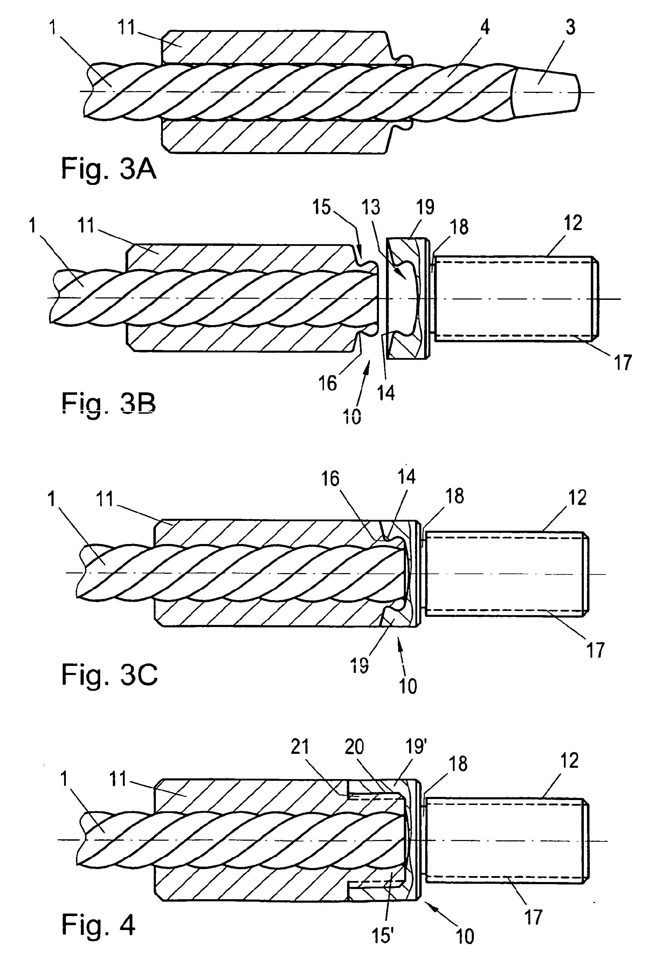

Bei der vorliegenden Pressklemme 10 gemäß den Fig. 3A, 3B und 3C (und auch gemäß Fig. 4) ist nun eine zweigeteilte Ausführung anstatt der einteiligen Ausführung der Pressklemmen 2 gemäß Stand der Technik vorgesehen. Die Pressklemme 10 weist zwei Teilstücke auf, nämlich ein Durchgangs-Pressklemmstück 11 ähnlich der Durchgangs-Pressklemme 2 gemäß Fig. 1 sowie ein dazu passendes Endstück 12, das in Fig. 3B und 3C gezeigt ist, und das erst nach dem Verpressen des Durchgangs-Pressklemmstücks 11 mit dem Seilende beispielsweise durch Verpressen mit dem Durchgangs-Pressklemmstück 11 verbunden wird. Im Einzelnen ist ersichtlich, dass gemäß Fig. 3A das Durchgangs-Pressklemmstück 11 wiederum, ähnlich wie gemäß Fig. 1A, auf das Seilende 4 aufgeschoben wird, wobei das Seilende 4 mit dem konditionierten Seilendstück 3 über die äußere Stirnseite des Pressklemmstücks 11 vorsteht. Im Anschluss daran wird das Durchgangs-Pressklemmstück 11 auf dem Seil 1 verpresst und das vorstehende Seilende 4 mit dem konditionierten Seilendstück 3 wird abgeschnitten, so dass das Seil 1 an der äußeren Stirnseite des Durchgangs-Pressklemmstücks 11 bündig abschließt, wie aus Fig. 3B ersichtlich ist. Nun wird das zugehörige Endstück 12 auf das Ende des Pressklemmstücks 11 aufgesetzt und mit diesem verpresst, so dass die fertige Pressklemme 10 gemäß Fig. 3C erhalten wird.

Für diese Verbindung des Endstücks 12 mit dem Durchgangs-Pressklemmstück 11 kann in der in Fig. 3 gezeigten Ausführungsform eine Sackloch-artige Ausnehmung 13 oder Vertiefung an der Stirnseite des Endstücks 12 vorgesehen sein, die hinterschnitten ist, wie in Fig. 3B mit dem Mündungsrand 14 gezeigt ist. Andererseits weist das Durchgangs-Pressklemmstück 11 an seinem äußeren Ende einen Verbindungsbereich 15 mit reduziertem Querschnitt auf, wobei in diesem Verbindungsbereich 15 eine der Hinterschneidung 14 der Ausnehmung 13 des Endstücks entsprechende Nut 16 vorhanden ist. Beim Verpressen wird dann der hinterschnittene Mündungsrand 14 der Ausnehmung 13 des Endstücks 12 in diese Nut 15 hineingepresst, s. Fig. 3C.

Das Endstück 12 kann wiederum mit einem Formteil als Anschlussteil, insbesondere mit einem Bolzen 17 mit Außengewinde, ausgebildet sein, wobei dieser Anschlussteil bzw. Bolzen 17 mit einem Durchmesser-kleineren Verbindungsabschnitt 18 mit dem Verpressabschnitt, d.h. Aufnahme-Verbindungsbereich 19, des Endstücks 12 verbunden ist, der einen größeren Durchmesser als der Anschlussteil oder Bolzen 17 des Endstücks 12 aufweist, wodurch letzterer beim Verpressen am Durchgangs-Pressklemmstück 11 unbeeinträchtigt bleibt.

In der Ausführungsform gemäß Fig. 4 weist das Endstück 12 in seinem Aufnahme-Verbindungsbereich 19' eine z.B. relativ kurze Sackloch-artige Bohrung mit einem Innengewinde 20 auf, und in entsprechender Weise hat der Durchmesser-kleinere Verbindungsbereich 15' des Pressklemmstücks 11 ein zum Innengewinde 20 passendes Außengewinde 21, so dass das Endstück 12 einfach mit dem Durchgangs-Pressklemmstück 11 durch Verschrauben verbunden werden kann, wie in Fig. 4 gezeigt ist. Im Übrigen entspricht die Ausbildung der beiden Teilstücke 11, 12 der Pressklemme 10 jener gemäß Fig. 3, ebenso wie das Aufpressen des Durchgangs-Pressklemmstücks auf das Seil 1 und das nachfolgende Abschneiden des Seilendes, s. Fig. 3A und 3B.

## Patentansprüche

1. Pressklemme (10) in zweiteiliger Ausführung, mit einem Durchgangs-Pressklemmstück (11) zur Anbringung an einem Seilende, und mit einem zur Verbindung mit diesem Durchgangs-Pressklemmstück (11) vorgesehenen Endstück (12), das am dem Pressklemmstück zugewandten Ende einen Verbindungsbereich (19, 19')aufweist, **dadurch gekennzeichnet, dass** der Verbindungsbereich (19, 19') des Endstücks (12) als Aufnahme-Verbindungsbereich (19, 19') mit einer stirnseitigen, Sackloch-artigen Ausnehmung (13) zur Aufnahme eines im noch unverbundenen Zustand einen reduzierten Querschnitt aufweisenden Verbindungsbereichs (15, 15') des Pressklemmstücks (11) ausgebildet ist.

2. Pressklemme nach Anspruch 1, **dadurch gekennzeichnet, dass** der Aufnahme-Verbindungsbereich (19) des Endstücks (12) durch Formschluss mit dem Verbindungsbereich (15) des Pressklemmstücks (11) verbindbar ist.

3. Pressklemme nach Anspruch 1, **dadurch gekennzeichnet, dass** der Aufnahme-Verbindungsbereich (19') des Endstücks (12) durch Kraftschluss mit dem Verbindungsbereich (15') des Pressklemmstücks (11) verbindbar ist.

4. Pressklemme nach Anspruch 3, **dadurch gekennzeichnet, dass** die Verbindungsbereiche (19', 15') des Endstücks (12) und des Pressklemmstücks (11) zueinander passende Gewinde (20, 21) aufweisen.

5. Pressklemme nach einem der Ansprüche 1 bis 3, **dadurch gekennzeichnet, dass** der Verbindungsbereich (15) des Pressklemmstücks (11) mit einer Nut (16) und der Aufnahme-Verbindungsbereich (19) mit einem hinterschnittenen Mündungsrand (14) versehen ist.

6. Pressklemme nach einem der Ansprüche 1 bis 5, **dadurch gekennzeichnet, dass** das Endstück (12) mit einem Bolzen, vorzugsweise Gewindebolzen (17), ausgeführt ist.

7. Seilendverbindung mit einer am Seilende (4) angebrachten Pressklemme (10) nach einem der Ansprüche 1 bis 6, wobei das Durchgangs-Pressklemmstück (11) auf das Seilende (4) aufgepresst und das Endstück (12) unter Aufnahme des Verbindungsbereichs (15, 15') des Pressklemmstücks (11) in seinem Aufnahme-Verbindungsbereich (19, 19') mit dem auf das Seilende (4) aufgepressten Pressklemmstück (11) verbunden ist.

8. Seilendverbindung nach Anspruch 7, **dadurch gekennzeichnet, dass** das Seilende (4) bündig mit dem aufgepressten Pressklemmstück (11) abgeschnitten ist.

9. Seilendverbindung nach Anspruch 7 oder 8, **dadurch gekennzeichnet, dass** das Endstück (12) mit dem Pressklemmstück (11) durch Formschluss verbunden ist.

10. Seilendverbindung nach Anspruch 7 oder 8, **dadurch gekennzeichnet, dass** das Endstück (12) kraftschlüssig mit dem Pressklemmstück (11) verbunden ist.

11. Seilendverbindung nach Anspruch 10, **dadurch gekennzeichnet, dass** das Endstück (12) mit dem Pressklemmstück (11) verschraubt ist.

12. Seilendverbindung nach einem der Ansprüche 7 bis 10, **dadurch gekennzeichnet, dass** das Endstück (12) mit dem Pressklemmstück (11) verpresst ist.

## Claims

1. Press clamp (10) in two-piece design having a through-pass press clamp piece (11) for securing on a rope end, and an end piece (12) provided for connecting to said through-pass press clamp piece (11), which has a connecting portion (19, 19') on the end facing the press clamp piece, **characterized in that** the connecting portion (19, 19') of the end piece (12) is designed as a female connecting portion (19, 19') having a blind hole-like recess (13) at the front face for receiving a connecting portion (15, 15') of the press clamp piece (11) having a reduced cross section in unconnected state.

2. Press clamp according to claim 1, **characterized in that** the female connecting portion (19) of the end piece (12) is connectable to the connecting portion (15) of the press clamp piece (11) by form locking.

3. Press clamp according to claim 1, **characterized in that** the female connecting portion (19') of the end piece (12) can be connected to the connecting portion (15') of the press clamp piece (11) by force locking.

4. Press clamp according to claim 3, **characterized in that** the connection portions (19', 15') of end piece (12) and press clamp piece (11) have threads (20, 21) matching each other.

5. Press clamp according to one of claims 1 to 3, **characterized in that** the connecting portion (15) of the press clamp piece (11) is provided with a groove (16) and the receiving connecting portion (19) is provided with an undercut mouthpiece edge (14).

6. Press clamp according to one of claims 1 to 5, **characterized in that** the end piece (12) is designed with a bolt, preferably a threaded bolt (17).

7. Rope end connection comprising a press clamp (10) according to any one of claims 1 to 6 attached to rope end (4), wherein the through-pass press clamp piece (11) is pressed onto the rope end (4), and in receiving the connecting portion (15, 15') of the press clamp piece (11) in the female connecting portion (19, 19') thereof the end piece (12) is connected to the press clamp piece (11) pressed onto the rope end (4).

8. Rope end connection according to claim 7, **characterized in that** the rope end (4) is cut flush with the pressed-on press clamp piece (11).

9. Rope end connection according to claim 7 or 8, **characterized in that** the end piece (12) is connected to the press clamp piece (11) by form locking.

10. Rope end connection according to claim 7 or 8, **characterized in that** the end piece (12) is connected to the press clamp piece (11) by force locking.

11. Rope end connection according to claim 10, **characterized in that** the end piece (12) is screwed together with the press clamp piece (11).

12. Rope end connection according to one of claims 7 to 10, **characterized in that** the end piece (12) is pressed together with the press clamp piece (11).

## Revendications

1. Embout de câble à presser (10) selon une exécution en deux pièces, comprenant une pièce d'embout à presser à passage traversant (11) destinée à être rapportée sur une extrémité de câble, et une pièce d'extrémité (12) qui est prévue pour être reliée à ladite pièce d'embout à presser à passage traversant (11), et présente à l'extrémité dirigée vers la pièce d'embout à presser, une zone de liaison (19, 19'), **caractérisé en ce que** la zone de liaison (19, 19') de la pièce d'extrémité (12) est réalisée en tant que zone de liaison à logement récepteur (19, 19') comportant un évidement (13) du type trou borgne destiné à recevoir une zone de liaison (15, 15') de la pièce d'embout à presser (11), qui est de section transversale réduite dans l'état encore non relié.

2. Embout de câble à presser selon la revendication 1, **caractérisé en ce que** la zone de liaison à logement récepteur (19) de la pièce d'extrémité (12) peut être reliée par complémentarité de formes à la zone de liaison (15) de la pièce d'embout à presser (11).

3. Embout de câble à presser selon la revendication 1, **caractérisé en ce que** la zone de liaison à logement récepteur (19') de la pièce d'extrémité (12) peut être reliée par adhérence à la zone de liaison (15') de la pièce d'embout à presser (11).

4. Embout de câble à presser selon la revendication 3, **caractérisé en ce que** les zones de liaison (19', 15') de la pièce d'extrémité (12) et de la pièce d'embout à presser (11) présentent des filetage (20, 21)
mutuellement adaptés.

5. Embout de câble à presser selon l'une des revendications 1 à 3, **caractérisé en ce que** la zone de liaison (15) de la pièce d'embout à presser (11) est pourvue d'une gorge (16), et la zone de liaison à logement récepteur (19) d'un bord d'embouchure (14) formant contre-dépouille.

6. Embout de câble à presser selon l'une des revendications 1 à 5, **caractérisé en ce que** la pièce d'extrémité (12) est d'une réalisation comportant une broche, de préférence une broche filetée (17).

7. Liaison de câble comprenant un embout de câble à presser (10) selon l'une des revendications 1 à 6, qui est rapporté sur l'extrémité de câble (4), liaison de câble pour laquelle la pièce d'embout à presser à passage traversant (11) est rapportée par compression sur l'extrémité de câble (4), et la pièce d'extrémité (12) est reliée à la pièce d'embout à presser (11) ayant été rapportée par compression sur l'extrémité de câble (4), en recevant la zone de liaison (15, 15') de la pièce d'embout à presser (11) dans sa zone de liaison à logement récepteur (19, 19').

8. Liaison de câble selon la revendication 7, **caractérisée en ce que** l'extrémité de câble (4) est sectionnée au ras de la pièce d'embout à presser (11) ayant été rapportée par compression.

9. Liaison de câble selon la revendication 7 ou la revendication 8, **caractérisée en ce que** la pièce d'extrémité (12) est reliée à la pièce d'embout à presser (11) par complémentarité de formes.

10. Liaison de câble selon la revendication 7 ou la revendication 8, **caractérisée en ce que** la pièce d'extrémité (12) est reliée à la pièce d'embout à presser (11) par adhérence.

11. Liaison de câble selon la revendication 10, **caractérisée en ce que** la pièce d'extrémité (12) est reliée par vissage à la pièce d'embout à presser (11).

12. Liaison de câble selon l'une des revendications 7 à 10, **caractérisée en ce que** la pièce d'extrémité (12) est reliée à la pièce d'embout à presser (11) par compression.
